# EUROPÄISCHE PATENTSCHRIFT

(11) **EP 3 095 505 B1**
(45) Veröffentlichungstag und Bekanntmachung des Hinweises auf die Patenterteilung: **07.03.2018**
(21) Anmeldenummer: 16170694.0
(22) Anmeldetag: 20.05.2016
(51) Int. Cl.: B01D 53/34, B01D 53/86, F23G 7/06, F23G 7/07, F27D 17/00

(54) **VERFAHREN UND ANLAGE ZUR REINIGUNG VON MIT STICKOXIDEN BELADENEN ABGASEN**
PROCESS AND SYSTEM FOR THE PURIFICATION OF WASTE GASES CHARGED WITH NITROGEN OXIDES
PROCÉDÉ ET INSTALLATION POUR LE NETTOYAGE DE GAZ D'ÉCHAPPEMENT CHARGÉS EN OXYDES D'AZOTE

(30) Priorität: 20.05.2015 DE 102015108014
(43) Veröffentlichungstag der Anmeldung: 23.11.2016
(73) Patentinhaber: Chemisch Thermische Prozesstechnik GmbH, 8042 Graz (AT)
(72) Erfinder: Mülleder, Christian, 8071 Grambach (AT); Ortner, Franz, 8413 St. Georgen (AT)
(74) Vertreter: LS-MP von Puttkamer Berngruber Loth Spuhler

(56) Entgegenhaltungen:
- EP-A1- 2 759 329
- DE-A1- 4 432 316
- DE-C1- 10 214 567
- US-A- 5 589 142
- US-A1- 2011 081 285

## Beschreibung

Die Erfindung bezieht sich auf ein Verfahren zur Reinigung von mit Stickoxiden beladenen Abgasen nach dem Oberbegriff des Anspruchs 1. Sie hat auch eine Anlage zur Durchführung des Verfahrens zum Gegenstand.

Eine solche Anlage ist aus DE 197 20 205 A1 sowie US 5 589 142 A, EP 2 759 329 A1 und US 2011/081285 A1 bekannt. Da die Abreinigung von Stickoxiden unter Zusatz eines Reduktionsmittels auch selektive katalytische Reduktion genannt wird, wird sie auch als SCR-(Selective Catalytic Reduction)-Anlage bezeichnet. Dabei werden die im Abgas enthaltenen Stickstoffoxide NOₓ (hauptsächlich Stickstoffmonoxid NO und Stickstoffdioxid NO₂) mit dem Reduktionsmittel bei 200 bis 450°C katalytisch zu Stickstoff und Wasser umgesetzt.

Die bekannte SCR-Anlage weist einen ersten Reaktor mit zwei mit Wärmespeichermassen gefüllten Wärmespeicherkammern auf. Das Rohgas wird in der einen Wärmespeicherkammer vorgewärmt, in dem Brennraum nacherhitzt und anschließend nach Zufuhr des Reduktionsmittels einem zweiten Reaktor mit dem Reduktionskatalysator zugeführt. Mit dem aus dem Reaktor austretenden entstickten heißen Reingas wird die Wärmespeichermasse in der zweiten Wärmespeicherkammer des ersten Reaktors aufgeheizt. Anschließend wird umgeschaltet, d.h., der zweiten Wärmespeicherkammer wird dann im Gegenstrom Rohgas zugeführt, und der ersten Wärmespeicherkammer entsticktes heißes Reingas vom SCR-Reaktor usw.

Die bekannte Anlage erfordert u. a. durch den gesonderten SCR-Reaktor und die Zufuhr des Reduktionsmittels zu dem aus dem

Brennraum austretenden Abgas einen nicht unerheblichen apparativen Aufwand. Wenn die Wärmespeicherkammer, der Rohgas zugeführt worden ist, auf Reingas umgeschaltet wird, wird ferner das gesamte in dieser Kammer vorhandene Rohgasvolumen in den Reingaskanal gespült, wodurch der Entstickungswirkungsgrad spürbar herabgesetzt wird.

Die am häufigsten eingesetzten SCR-Katalysatoren enthalten als Hauptkomponente (Trägermaterial) Titandioxid. Nebenbestandteile sind Vanadiumpentoxid sowie Wolfram- und ggf. auch Molybdän-Verbindungen. Beispielsweise wird in JP 76-68907 ein Katalysator beschrieben, der aus V- und Nb-Verbindungen als Aktivkomponenten auf einem TiO₂-Träger besteht. Ein in DE 38 21 480 beschriebener Katalysator enthält TiO₂, V, Mo und/oder W und Zn. In DE 26 17 744 wird außerdem Zinn als optionale Aktivkomponente angeführt. Es wurde jedoch auch eine Vielzahl anderer Katalysatorzusammensetzungen beschrieben, wie Fe auf oxidischen Trägern (EP 0 667 181 A1), verschiedene Aktivkomponenten auf Zeolith-Trägern, etwa Ce (WO/17949) Cu (DE 44 13 359), Ag und Pt (EP 0 682 975 A1) oder auch einfache Metalloxid-Katalysatoren, z. B. ein Spinell ZnAl₂O₄ (EP 0 676 232 A1). Auch gelingt an SCR-Katalysatoren eine Dioxin- und Furan-Abreicherung (WO91/04780).

Aus DE 199 05 733 B4 ist eine regenerative katalytische Nachverbrennungsanlage bekannt, die 2n+1 Paare von jeweils durch eine Schaltkammer verbundenen Wärmespeicherkammern, wobei n eine ganze Zahl größer 0 ist, verwendet. Das zu reinigende Rohgas wird zur Vorerwärmung wechselweise der aufgeheizten Wärmespeichermasse von n Wärmespeicherkammerpaaren und das entstickte heiße Reingas im Gegenstrom der Wärmespeichermasse von anderen n Wärmespeicherkammerpaaren zugeführt. Ein Wärmespeicherkammerpaar wird dabei gespült. Die Reduktion der Stickoxide mit dem Reduktionsmittel erfolgt an einer brennraumseitig in den Wärmespeicherkammern angeordneten Katalysatormasse. Die Zugabe des Reduktionsmittels erfolgt hierbei direkt in das Rohgas.

Nachteilig ist diese Anordnung, wenn im Rohgas Schwefelkomponenten enthalten sind, die mit dem zugegebenen Reduktionsmittel salzförmige feste Ablagerungen bilden, die die Wärmespeichermasse verlegen können. Insbesondere Ammoniumhydrogensulfit, Ammoniumsulfit, Ammoniumhydrogensulfat und Ammoniumsulfat sind solche typischen Salze.

Aufgabe der Erfindung ist es, ein SCR-Verfahren bzw. eine SCR-Anlage für hohe Durchsätze mit geringem apparativen Aufwand, geringen Betriebskosten und einem hohen Entstickungswirkungsgrad bereitzustellen.

Dies wird erfindungsgemäß mit dem im Anspruch 1 gekennzeichneten Verfahren und der im Anspruch 10 gekennzeichneten Anlage erreicht. In den Unteransprüchen sind vorteilhafte Ausgestaltungen der Erfindung wiedergegeben.

Bei dem erfindungsgemäßen Verfahren zur Reinigung von mit Stickoxiden beladenem Abgas in einem Reaktor mit Wärmespeichermassen enthaltenden Wärmespeicherkammern, die auch als Regeneratoren bezeichnet werden, tritt das zu reinigende Abgas oder Rohgas wechselweise in wenigstens eine der Wärmespeicherkammern ein. Durch die Wärmespeichermasse in dieser Kammer wird das Rohgas vorerwärmt, anschließend mit einem Reduktionsmittel zur Reduktion der Stickoxide versetzt und einem Katalysator zur Reduktion der Stickoxide zugeführt. Das entstickte heiße Reingas heizt dann die Wärmespeichermasse in der wenigstens einen Wärmespeicherkammer auf, aus der es austritt.

Mit einem Rezirkulationssystem wird der wenigstens einen Wärmespeicherkammer, aus der das Reingas austritt, vor dem Eintritt des Reingases in deren Wärmespeichermasse ein Teilstrom entnommen, der mit einer Wärmequelle aufgeheizt und mit dem Reduktionsmittel versetzt der Wärmespeicherkammer, in die das Rohgas eintritt, nach Austritt des Rohgases aus deren Wärmespeichermasse zugeführt wird.

Das heißt, die erfindungsgemäße Anlage weist 2n Paare von Wärmespeicherkammern auf. Zur Bildung der Wärmespeicherkammerpaare besteht der Reaktor aus zwei baulich getrennten Wärmetauschermassen, um die einzelnen Wärmespeicherkammern zu bilden.

Die Zahl n kann 1,2,3 oder eine andere ganze Zahl größer 0 sein. Die n Wärmespeicherkammerpaare sind an einen Rohgaskanal und n Wärmespeicherkammerpaare an einen Reingaskanal angeschlossen. Im einfachsten Fall weist die Anlage also 1 Wärmespeicherkammerpaar auf, wobei eine Wärmespeicherkammer mit dem Rohgaskanal und eine Wärmespeicherkammer mit dem Reingaskanal verbunden ist. Wenn die Anlage beispielsweise vier Wärmespeicherkammern aufweist, also n=2 ist, sind zwei Wärmespeicherkammern mit dem Rohgaskanal und zwei Wärmespeicherkammern mit dem Reingaskanal verbunden. Nach einer Zeit von vorzugsweise 1 bis 3 Minuten wird die mit dem Rohgas verbundene Wärmespeicherkammer mit dem Reingas verbunden und die mit dem Reingas verbundene Wärmespeicherkammer mit dem Rohgas verbunden. Diese Umschaltung geschieht über jeweils 2 Klappen pro Kammer, die vorzugsweise als Hubklappen ausgebildet sind. Durch diese Umschaltung wird die zuvor in der Reingaskammer gespeicherte Wärme dem Rohgas zur Verfügung gestellt und umgekehrt.

Da bei der erfindungsgemäßen Anlage der Reduktionskatalysator zwischen den Wärmespeicherkammern über der Wärmespeichermasse angeordnet ist, ist für die SCR-Reaktion nur ein geringer apparativer Aufwand erforderlich. Da das entstickte heiße Reingas zur Vorwärmung des Rohgases verwendet wird, kann zudem mit der erfindungsgemäßen Anlage ein hoher thermischer Wirkungsgrad von beispielsweise 90-95% und mehr erreicht werden.

Die Wärmequelle in dem Rezirkulationssystem kann beispielsweise ein Brenner, eine Elektroheizung oder ein Wärmetauscher sein.

Das Reduktionsmittel, mit dem das aufgeheizte Reingas in dem Rezirkulationssystem versetzt wird, kann eine Stickstoffwasserstoffverbindung sein, also beispielsweise Ammoniak, der sowohl gasförmig wie auch in wässriger Lösung eingesetzt werden kann, oder beispielsweise Harnstoff als wässrige Lösung oder besser gasförmiger Ammoniak sein, der katalytisch aus einer vorverdampften Harnstofflösung erzeugt wird, z.B. mit einem Harnstoff-Hydrolyse-Katalysator oder H-Kat (vgl. z.B. EP 2 172 266 A1). Letzteres hat den Vorteil, dass 2 mol Ammoniak pro mol Harnstoff gebildet werden, die mit NOx reagieren können, wohingegen bei direkter Verwendung von Harnstoff nur einer der im Molekül enthaltenen Stickstoffe mit NOx reagiert und der zweite N2O bildet, welches ein potentes Treibhausgas ist.

Um das Reduktionsmittel gleichmäßig über den gesamten Querschnitt in die Wärmespeicherkammer einzubringen und die zum kontinuierlichen Betrieb notwendige Wärme gleichmäßig dem vorerwärmten Rohgasstrom zuzuführen, ist auf der dem Reduktionskatalysator zur Reduktion der Stickoxide zugewandten Seite der Wärmespeichermasse der Wärmespeicherkammern jeweils ein Verteilrechen im Abstand von dem Reduktionskatalysator, jedoch nahe der Wärmespeichermasse vorgesehen.

Mit dem Verteilrechen in der Wärmespeicherkammer, aus der das Reingas austritt, wird ein Teilstrom des heißen Reingases über das Rezirkulationssystem entnommen, welcher mit der Wärmequelle weiter aufgeheizt und, mit dem Reduktionsmittel versetzt, dem Verteilrechen in der Wärmespeicherkammer zugeführt wird, in der das zu reinigende Rohgas vorerwärmt wird.

Die Temperatur des mit der Wärmequelle aufgeheizten und mit dem Reduktionsmittel versetzten Teilstroms beträgt vorzugsweise 270 bis 550 °C.

Die Größe des Teilstroms und dessen Temperatur wird so bemessen, dass das Rohgas auf die für die SCR-Reaktion notwendige Temperatur von 200 bis 400 °C, insbesondere 250 bis 350 °C erwärmt wird.

Vorzugsweise ist eine Bypass-Leitung zur Umgehung der Wärmequelle in dem Rezirkulationssystem vorgesehen, um die Temperatur des mit dem Reduktionsmittel versetzten Reingases einzustellen, das dem Ventilrechen in der Wärmekammer zum Vorerwärmen des Rohgases auf die für die die SCR-Reaktion notwendige Temperatur zugeführt ist. Damit kann beispielsweise ein Gasbrenner geringer Baugröße als Wärmequelle eingesetzt werden.

Die Wärmespeichermasse besteht vorzugsweise aus extrudierten prismenförmigen Wärmespeicherkörpern, die eine Vielzahl von in Gasströmungsrichtung verlaufenden Gasdurchtrittskanälen aufweisen. Solche Wärmespeichermassen werden in EP-0 472 605 A1 beschrieben. Die Katalysatormasse kann ebenfalls aus solchen extrudierten keramischen prismenförmigen Körpern mit in Gasströmungsrichtung verlaufenden Gasdurchtrittskanälen bestehen.

Der Katalysator kann dabei aus den eingangs erwähnten SCR-Katalysatorenmassen hergestellt sein. Beispielsweise kann der Reduktionskatalysator aus TiO₂ als Hauptkomponente und mit 1-5 Gew.% Vanadiumoxid und/oder Wolframoxid bestehen. Der SCR-Katalysator, also der Katalysator zur Reduktion der Stickoxide kann so ausgebildet sein, dass die erfindungsgemäße Anlage auch zur katalytischen Dioxin- und/oder Furan-Oxidation verwendet werden kann. Ein Reduktionsmittelzusatz ist natürlich nicht vorgesehen, wenn keine Entstickung sondern nur eine Dioxin- bzw. Furan-Oxidation erfolgt.

Ein Problem bei SCR-Anlagen stellt der sogenannte Ammoniak-Schlupf dar, d.h., Ammoniakspuren, die am Katalysator nicht umgesetzt werden und damit ins Freie gelangen können. Nach den gesetzlichen Bestimmungen darf das freigesetzte Abgas nämlich nur geringe Spuren an Ammoniak enthalten, typisch weniger als 20 ppm.

Um eine hohe Mischgüte des Reduktionsmittels mit dem Rohgas zu gewährleisten, wird es daher erfindungsgemäß nicht direkt, sondern in einem Reingas-Teilstrom, welcher stromab des SCR-Katalysators über den nicht benötigten Verteilrechen entnommen wird, eingedüst. Die hohe Güte der Mischung des Reduktionsmittels mit dem Reingas-Teilstrom wird durch die Anordnung der Reduktionsmitteldüsen, den Ort der Einbringung und beispielsweise durch einen statisch Mischer stromab der Eindüsstelle gewährleistet.

Um einen Ammoniak-Schlupf auszuschließen, wird das Reduktionsmittel vorzugsweise unterstöchiometrisch zudosiert, d.h., z.B. das NH₃/NOₓ-Mol-Verhältnis beträgt vorzugsweise weniger als 1.

Um dem Reduktionsmittelschlupf während des Umschaltens entgegenzuwirken, wird kurz vor dem Umschalten die Reduktionsmitteleindüsung in dem Rezirkulationssystem unterbrochen und die Reduktionsmittelreste in dem Teilstrom der Rezirkulationsleitung werden durch das vorgewärmte Reingas ausgetrieben. Dadurch ist gewährleistet, dass sich zum Zeitpunkts des Umschaltens kein Reduktionsmittel mehr im Verteilrechen und stromauf des SCR-Katalysators befindet. Die NOx-Abreinigung wird dadurch kaum beeinträchtigt, da der SCR-Katalysator durch seine Speicherfähigkeit genügend Reduktionsmittel angelagert hat, um die DeNOx-Reaktion aufrecht zu halten.

Die Wärmespeichermasse besteht vorzugsweise aus keramischen Wärmespeicherkörpern mit prismenförmigen Kanälen und mit einer offenen Porosität von weniger als 10 %, insbesondere weniger als 5 %, um zu verhindern, dass NOₓ bzw. Reduktionsmittel oder andere Schadstoffe an der Oberfläche der Wärmetauscher adsorbieren können.

Die SCR-Katalysatormasse besteht vorzugsweise aus Wabenkörpern mit in Strömungsrichtung verlaufenden Kanälen.

Zusätzlich kann direkt auf der Wärmespeichermasse ein Oxidationskatalysator angeordnet sein. Dadurch wird ein zusätzlicher Tragerost eingespart. Der Oxidationkatalysator dient zur Abreinigung von oxidierbaren Schadstoffen im Rohgas, z.B. organischen Verbindungen oder Kohlenmonoxid. Diese Anordnung verhindert, dass durch den Oxidationskatalysator auch das Reduktionsmittel oxidiert wird, da er sich stromauf der Eindüsstellen des Reingas-Reduktionsmittelgemisches befindet. Da sich eine weitere Lage Oxidationskatalysator auf der Wärmespeichermasse stromab des SCR Katalysators befindet, ist gewährleistet, dass einerseits nicht vollständig oxidierte Schadstoffe sowie ein eventuell vorhandenen Reduktionsmittelschlupf nahezu vollständig oxidiert werden.

Nachstehend ist die Erfindung anhand der beigefügten Zeichnungen näher erläutert. Darin zeigen, jeweils schematisch:
Figur 1 einen Längsschnitt durch eine Anlage mit einem Reaktor mit einem Paar Wärmespeichermassen enthaltenden Wärmespeicherkammern;
Figur 2 einen senkrechten Schnitt durch die Anlage entsprechend der Linie I-I in Figur 1;
Figur 3 eine perspektivische Ansicht eines teilweisen Längsschnitts durch die Anlage nach Figur 1;
Figur 4 eine perspektivische Ansicht auf die Verteilrechen und die Rohgaszufur- und Reingasabfuhrkanäle der Anlage nach Figur 1 bis 3;
Figur 5 einen Längsschnitt durch eine Anlage mit einem Reaktor mit drei Paar Wärmespeichermassen enthaltenden Wärmespeicherkammern; und
Figur 6 eine der Figur 1 entsprechende Ansicht der Anlage zur Veranschaulichung der Pyrolyse von Ablagerungen an den Wärmespeichermassen.

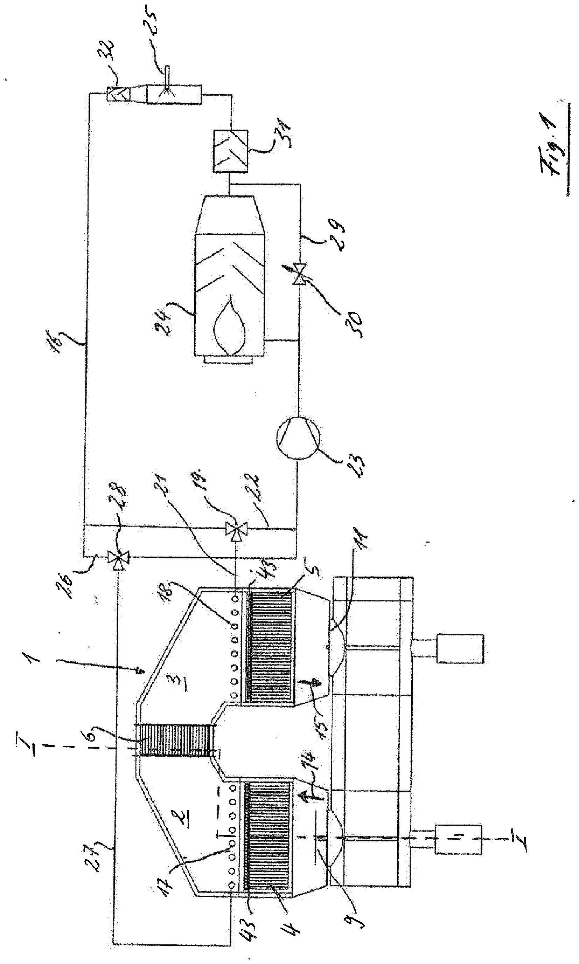

Gemäß Fig. 1 bis 3 weist ein Reaktor 1 eine erste Wärmespeicherkammer 2 und eine zweite Wärmespeicherkammer 3 auf, die jeweils einen Wärmespeichermasse 4 bzw. 5 enthalten und über einen SCR-Katalysator 6 zur Reduktion von Stickoxiden miteinander verbunden sind.

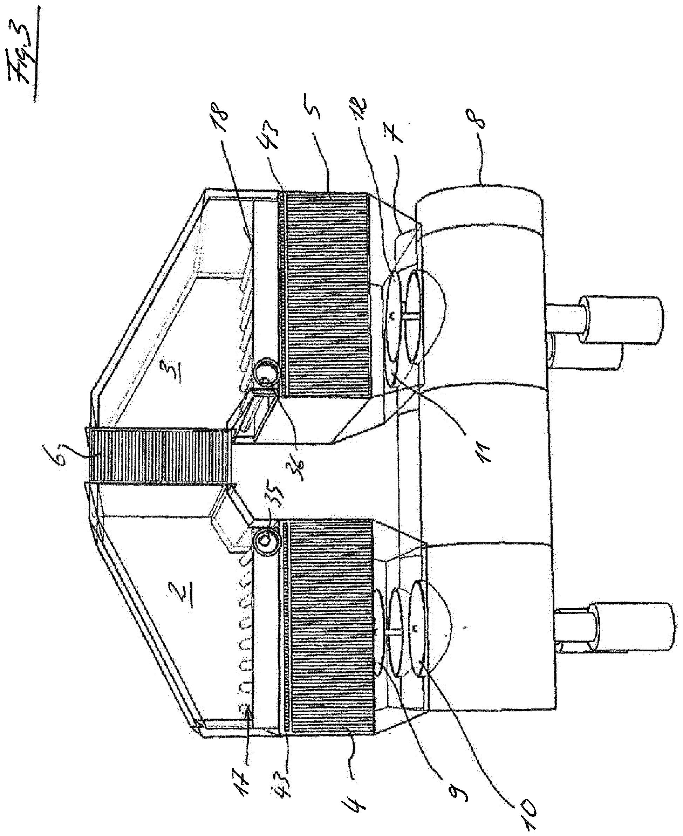

Das zur reinigende Rohgas wird dem Reaktor 1 über die Rohgaszufuhrleitung 7 zugeführt, während das Reingas über die Reingasleitung 8 ins Freie tritt. Dabei ist nach Fig. 1 bis 3 das Absperrorgan 9 für die Rohgaszufuhr zu der Wärmespeicherkammer 2 geöffnet und das Absperrorgan 10 für die Reingasabfuhr geschlossen, während das Absperrorgan 11 für die Rohgaszufuhr zur der Wärmespeicherkammer 3 geschlossen und das Absperrorgan 12 für die Reingasabfuhr aus der Wärmespeicherkammer 3 geöffnet ist (Fig. 3). Die Absperrorgane 9 bis 12 können als Klappen ausgebildet sein und werden beispielsweise durch Linearantriebe betätigt.

Damit kann das mit Stickoxiden beladene Abgas oder Rohgas wechselweise in die Wärmespeicherkammern 2 oder 3 eintreten, wobei, wie in Fig. 1 durch die Pfeile 14 bzw. 15 angedeutet, gemäß Fig. 1 bis 3 das Rohgas in die Wärmespeicherkammer 2 eintritt und das Reingas aus der Wärmespeicherkammer 3 austritt.

Das Rohgas 14 wird dabei durch die Wärmespeichermasse 4 vorerwärmt, welche durch das zuvor austretende Reingas erwärmt worden ist.

Zur Reduktion der Stickoxide wird das Rohgas 14 mit einem Reduktionsmittel, beispielsweise Ammoniak, versetzt und dem SCR-Katalysator 6 zugeführt. Das entstickte heiße Reingas 15 heizt dann beim Austreten aus der Wärmespeicherkammer 3 deren Wärmespeichermasse 5 auf.

Zur Reduktion der Stickoxide mit dem Reduktionsmittel, beispielsweise Ammoniak, an dem SCR-Katalysator 6 ist eine Temperatur von beispielsweise 200 bis 350 °C notwendig.

Um diese Temperatur zu erreichen, weist die Anlage ein Rezirkulationssystem mit einer Kreislaufleitung 16 und je einen Verteilrechen 17 und 18 auf, der jeweils an der dem SCR-Katalysator 6 zugewandten Seite der Wärmespeichermasse 4, 5 der Wärmespeicherkammern 2, 3 im Abstand von dem SCR-Katalysator 6 angeordnet ist.

Dabei wird z.B. mit dem Verteilrechen 18 in der Wärmespeicherkammer 3, aus der das Reingas austritt, dem heißen Reingas in der Wärmespeicherkammer 3 mit der Kreislaufleitung 16 über das Dreiwegeventil 19 und die Verbindungsleitungen 21, 22 mit dem Gebläse 23 ein Teilstrom des heißen Reingases entnommen, mit einer Wärmequelle 24, beispielsweise einem Brenner, weiter aufgeheizt und mit einer Einrichtung 25 mit dem Reduktionsmittel, z.B. Ammoniak, versetzt, um dann als heißes, mit Reduktionsmittel versetztes Reingas über die Verbindungsleitungen 26, 27 und das Dreiwegeventil 28 dem Verteilrechen 17 in der Wärmespeicherkammer 2 zugeführt zu werden, um das Rohgas in der Wärmespeicherkammer 2 auf die für die Reduktion der in dem Rohgas enthaltenen Stickoxide notwendige Temperatur von 200 bis 450 °C zu erwärmen.

Der Teilstrom des Reingases, der der Wärmespeicherkammer 3 entnommen wird, aus der das Reingas austritt, kann beispielsweise 2 bis 15 Prozent betragen.

Zur Umgehung der Wärmequelle 24 ist eine Bypass-Leitung 29 mit einem Regulierventil 30 vorgesehen, an die sich der Mischer 31 in der Kreislaufleitung 16 anschließt.

Damit kann nur ein Teil des Teilstroms des Reingases der Wärmequelle 24 zugeführt werden, der dann mit dem restlichen Teilstrom vereinigt wird, bevor das Reduktionsmittel mit der Einrichtung 25 in den Teilstrom eingebracht wird.

Damit kann die Temperatur der Wärmequelle 24 so hoch gewählt werden, dass darin weder CO noch andere teilverbrannte Brennstoffrückstände zu erwarten sind.

Auch kann zur Minimierung des Druckverlustes, bei niedrigem Stickoxidgehalt des Rohgases 14 praktisch der gesamte Teilstrom in der Kreislaufleitung 16 der Wärmequelle 24 zugeführt werden, bei einem mittleren Stickoxidgehalt des Rohgases 14 ein Teil des Teilstroms der Wärmequelle 24 und ein Teil der Bypass-Leitung 29 und bei hohem Stickoxidgehalt des Rohgases 14 ggf. der gesamte Teilstrom über die Bypass-Leitung 29 an der Wärmequelle 24 vorbei zur Reduktionsmittelzufuhreinrichtung 25.

An die Einrichtung 25 zur Reduktionsmittelzufuhr schließt sich in der Kreislaufleitung 16 der Mischer 32 zur Verteilung des mit der Einrichtung 25 eingedüsten Reduktionsmittels in dem erhitzten Teilstrom an.

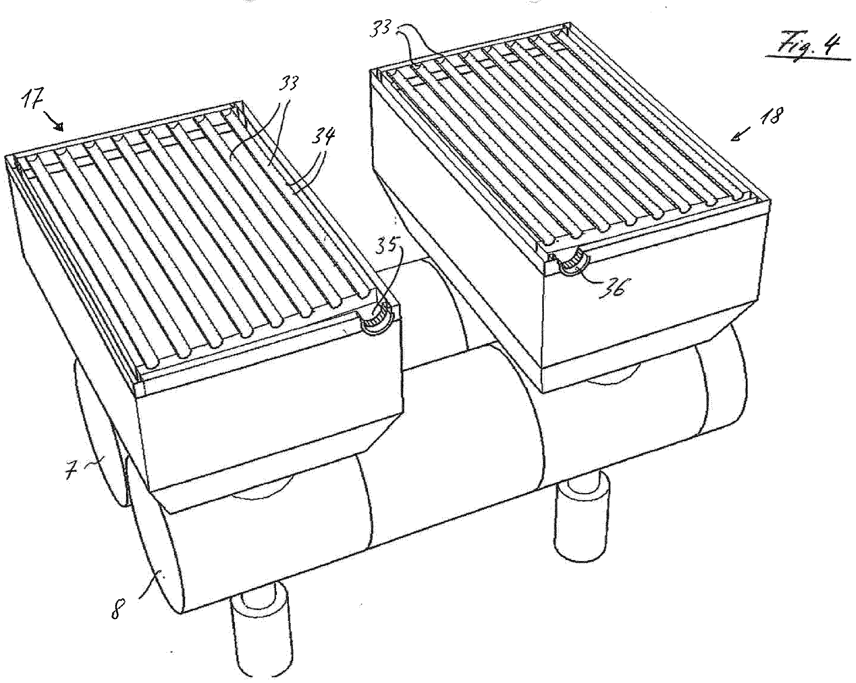

Wie insbesondere aus Fig. 4 ersichtlich, weisen die Verteilrechen 17, 18 sich quer durch die Wärmespeicherkammern 2, 3 erstreckende Rohre 33 auf, die mit einer Vielzahl von seitlichen Öffnungen 34 versehen sind, um das Reduktionsmittel über den Querschnitt der Wärmespeicherkammern 2, 3 gleichmäßig zu verteilen bzw. das Reingas abzusaugen. Die Rohre 33 in der Wärmespeicherkammer 2 sind dabei an eine Sammelleitung 35 und die Rohre 33 in der Wärmespeicherkammer 3 an eine Sammelleitung 36 angeschlossen.

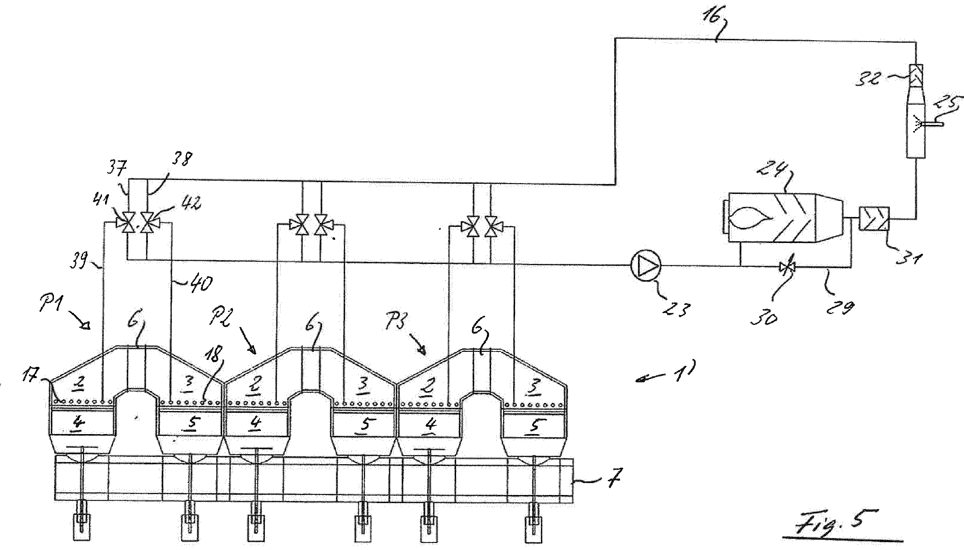

Gemäß Fig. 5 weist der Reaktor 1' mehrere, nämlich drei Paare P1, P2, P3 von Wärmespeicherkammern 2 und 3 auf, wobei jedes Paar P1, P2, P3 eine Wärmespeicherkammer 2, in die das Rohgas aus der gemeinsamen Rohgaszufuhrleitung 7 eintritt, mit einer Wärmespeichermasse 4 und einem Ventilrechen 17 und eine Wärmespeicherkammer 3, aus der das Reingas austritt, mit einer Wärmespeichermasse 5 und einem Ventilrechen 18 umfasst, ferner einen SCR-Katalysator 6, der zwischen den beiden Wärmespeicherkammern 2 und 3 jedes Paares P1, P2 und P3 angeordnet ist. Wie in Fig. 5 für das Paar P1 beispielhaft gezeigt, ist die Kreislaufleitung 16 des Rezirkulationssystems über Verbindungsleitungen 37 bis 40 und zwei Dreiwegeventile 41, 42 an die Verteilrechen 17, 18 anschließbar.

Dabei wird den Wärmespeicherkammern 3 jedes Paares P1, P2 und P3, aus denen das Reingas austritt, jeweils ein Teilstrom des Reingases mit dem Verteilrechen 18 entnommen. Die entnommenen Teilströme werden, wie in Fig. 5 für das Paar P1 gezeigt, über Verbindungsleitungen 40, 38 und das Dreiwegeventil 42 der Kreislaufleitung 16 des Rezirkulationssystems zugeführt, mit der Wärmequelle 24erhitzt, mit der Einrichtung 25 mit Reduktionsmittel versetzt und über die Verbindungsleitungen 37, 39 und das Dreiwegeventil 41 dem Verteilrechen 17 in der Wärmespeicherkammer 2 zugeführt, in die das Rohgas eintritt.

Mit einer einzigen Wärmequelle 24 und einer einzigen Reduktionsmittelzufuhreinrichtung 25 kann damit das Rohgas in allen Wärmespeicherkammern 2 eines Reaktors mit Paaren P1, P2, P3 von Wärmespeicherkammern 2, 3 aufgeheizt und mit dem zur Entstickung erforderlichen Reduktionsmittel versetzt werden.

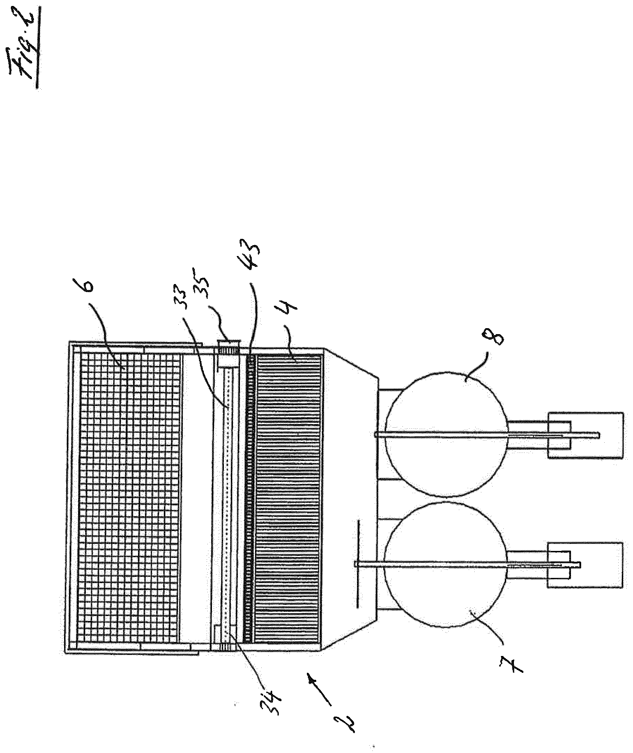

Wie insbesondere Fig. 1 und 2 zu entnehmen, weist jede Wärmespeicherkammer 2, 3 zwischen der Wärmespeichermasse 4, 5 und dem Verteilrechen 17, 18 einen Oxidationskatalysator 43 auf, um in dem Abgas enthaltene organische Verbindungen und/oder Kohlenmonoxid zu oxidieren. Diese Anordnung des Oxidationskatalysators 43 stellt sicher, dass das mit dem Verteilrechen 17 bzw. 18 eingedüste Reduktionsmittel, beispielsweise Ammoniak, durch den Oxidationskatalysator 43 nicht verbrannt wird.

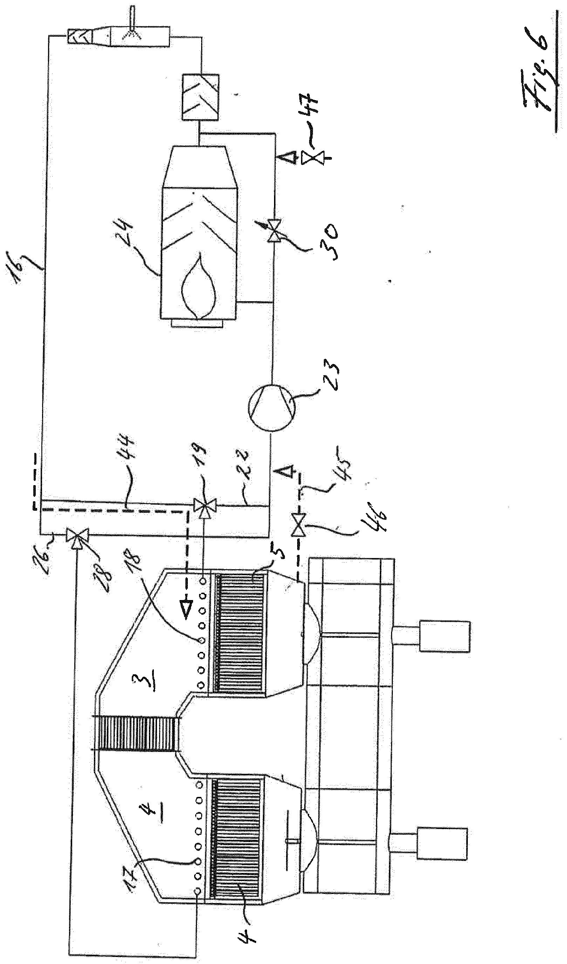

Um organische Ablagerungen an den Wärmespeichermassen 4, 5 zu entfernen, kann mit dem Rezirkulationssystem eine Pyrolyse durchgeführt werden. Dazu wird, wie in Fig. 6 gezeigt, der Wärmespeicherkammer 3 mit dem Verteilrechen 18 entsprechend der gestrichelten Linie 44 ein mindestens 400 °C heißes Gas mit der Kreislaufleitung 16 zugeführt, das mit der als Brenner ausgebildeten Wärmequelle 24 erzeugt worden ist und durch die Wärmespeichermasse 5 hindurchtritt, um die darin enthaltenen Ablagerungen pyrolytisch zu zersetzen. Das Gas mit dem Pyrolyseprodukten wird über eine Leitung 45 mit einem Absperrorgan 46, wie ebenfalls gestrichelt dargestellt, mit dem Gebläse 23 in die als Brenner ausgebildete Wärmequelle 24 gesaugt, um die Pyrolyseprodukte zu verbrennen. Das Regulierventil 30 ist dabei vollständig geschlossen, um zu verhindern, dass Pyrolyseprodukte sich im Rezirkulationssystem anreichern können.

Die aus der Wärmequelle austretenen Heißgase werden im Falle einer zu hohen Temperatur durch Öffnen der Frischluftklappe 47 abgekühlt. Die Klappe 47 dient auch zu Aufrechterhaltung des minimalen Restsauerstoffgehaltes im Heißgas, der für die vollständige Verbrennung der Pyrolysegase notwendig ist. Organische Ablagerungen in der Wärmespeichermasse 4 der Wärmespeicherkammer 2 können in entsprechender Weise beseitigt werden. Die Einrichtung 25 zur Reduktionsmittelzufuhr ist dabei selbstverständlich außer Betrieb.

### Beispiel:

Ein Abgas aus der Zementklinkerproduktion mit einem Durchsatz von 400 000 Nm³/h und einer Temperatur von 150°C hat folgende Zusammensetzung:
CO2 10,7 vol%
H2O 12,2 vol%
O2 8 vol%
N2 69 vol%
SO2 500 mg/m³
CO 1000 mg/m³
NO 800 mg/m³
Corg 50 mg/m³

Dieses Abgas wird über den Rohgassammler 7 in eine Anlage mit insgesamt 6 Wärmespeicherkammern 2, 3 oder Regeneratoren geleitet, wobei der erste, dritte und fünfte Regenerator mittels der Eintrittsklappen als Rohgasgenerator 2 geschaltet sind. Das Rohgas wird dort von einen Wärmespeicherbett 5 mit parallel und übereinander angeordneten extrudierten Wabenkörpern im Gesamtmaß von 4,5m x 7m und einer Höhe von 1,5m auf 290°C aufgeheizt. Darauf ist ein Oxidationskatysator 43 in Wabenkörperform mit Öffnungen von 3 mm und mit einer Höhe von 150 mm angeordnet. Beim Durchströmen dieses Oxidationskatalysators wird das CO auf 200 mg/Nm³ und das Corg auf 10 mg/Nm³ reduziert. Danach wird über drei horizontale Verteilrechen 17 mit 8 parallelen Rohren 33 mit jeweils 150 seitlichen Öffnungen 34 mit 10mm Durchmesser ein mit 12 g/Nm³ Ammoniak angereichertes Reingas mit einer Temperatur von 420 °C und einer Menge von 5000 Nm³/h je Regenerator zugemischt.

Dieses Gemisch mit einer Temperatur von nun 295 °C wird durch einen Reduktionskatalysator 6 in Wabenkörperform mit horizontalen Kanälen geführt. Die drei Katalysatorpakete haben jeweils eine Abmessung von 1,2x7x2,5 m.

Nach dem Katalysator 6 sind Stickoxide NO auf 80 mg/m³ reduziert. Dabei hat sich das Abgas durch die Reaktion am Katalysator 6 auf 300 °C erwärmt. Nun strömt das Abgas in die 3 Reingasregeneratoren ein, wobei ein Teilstrom von insgesamt 15 000 Nm³/h über die Rechen 18 abgezogen wird.

Der abgezogene Teilstrom wird über ein Dreiwegeventil 19 einer Brennkammer 24 zugeführt, wo ein Teil des Abgases auf 800°C erhitzt wird, ein zweiter Teil des Gases wird mit einer Bypass-Leitung 29 nach der Brennkammer 24 zugemischt, wodurch sich die Mischtemperatur auf 500°C einstellt.

Danach wird in einer zweiten Mischkammer 25 730 kg/h 25%ige Ammoniaklösung zugeführt, sodass die Konzentration von Ammoniak in dem Gasstrom 12 g/Nm³ erreicht. Dieser Teilstrom wird dem Rohgas vor dem Stickoxidreduktionskatalysator 6 mit einer Temperatur von 420 °C mit dem Verteilrechen 17 zugeführt. Beim Durchströmen des Oxidationskatalysators oberhalb des Reingaswärmetauschers wird das verbleibende CO von 200 auf 40 mg/Nm³ und der org. C-Gehalt weiter von 10 auf 2 mg/Nm³ reduziert.

Der gereinigte Hauptabgasstrom strömt nun in die Austrittsregeneratoren und verlässt die Anlage über die jeweiligen Reingasklappen des zweiten, vierten und sechsten Regenerators mit einer Temperatur von 150°C.

Nach jeweils 2 Minuten werden die Regeneratoren in der Strömungsrichtung versetzt umgeschaltet.

## Patentansprüche

1. Verfahren zur Reinigung von mit Stickoxiden beladenem Abgas in einem Reaktor (1, 1') mit Wärmespeichermassen (4, 5) enthaltenden Wärmespeicherkammern (2, 3), bei dem das zu reinigende Rohgas wechselweise in eine Wärmespeicherkammer (2) eintritt, durch deren Wärmespeichermasse (4) vorerwärmt und, mit einem Reduktionsmittel zur Reduktion der der Stickoxide versetzt, einem Katalysator (6) zur Reduktion der Stickoxide zugeführt wird und das entstickte heiße Reingas die Wärmespeichermasse (5) in der wenigstens einen Wärmespeicherkammer (3) aufheizt, aus der das Reingas austritt, **gekennzeichnet durch** ein Rezirkulationssystem, mit dem der wenigstens einen Wärmespeicherkammer (3), aus der das Reingas austritt, vor dem Eintritt des Reingases in deren Wärmespeichermasse (5) ein Teilstrom des Reingases entnommen, mit einer Wärmequelle (24) aufgeheizt und, mit einem Reduktionsmittel versetzt, der wenigstens einen Wärmespeicherkammer (2), in die das Rohgas eintritt, nach Austritt des Rohgases aus deren Wärmespeichermasse (4) zugeführt wird.

2. Verfahren nach Anspruch 1, **dadurch gekennzeichnet, dass** der Reaktor (1') mehrere Paare (P1, P2, P3) von Wärmespeicherkammern (2, 3) aufweist, wobei jedes Paar (P1, P2, P3) eine Wärmespeicherkammer (2), in die das Rohgas eintritt, einen Katalysator (6) zur Reduktion der Stickoxide und eine Wärmespeicherkammer (3), aus der das Reingas austritt, umfasst, wobei den Wärmespeicherkammern (3), aus denen das Reingas austritt, jeweils ein Teilstrom des Reingases entnommen wird, und die entnommenen Teilströme mit dem Rezirkulationssystem gemeinsam der Wärmequelle (24) zugeführt werden, mit dem Reduktionsmittel versetzt und als Teilstrom den Wärmespeicherkammern (2) der Paare (P1, P2, P3), in die das Rohgas eintritt, wieder zugeführt wird.

3. Verfahren nach Anspruch 1 oder 2, **dadurch gekennzeichnet, dass** der Teilstrom des Reingases, der der Wärmekammer (3) entnommen wird, aus der das Reingas austritt, zwischen 2 und 15 Prozent des Reingases beträgt.

4. Verfahren nach einem der vorstehenden Ansprüche, **dadurch gekennzeichnet, dass** nur ein Teil des Teilstroms des Reingases der Wärmequelle (24) zugeführt und mit dem restlichen Teilstrom vor dem Versetzen mit dem Reduktionsmittel wieder vereinigt wird.

5. Verfahren nach einem der vorstehenden Ansprüche, **dadurch gekennzeichnet, dass** der Teilstrom des Reingases mit einer Temperatur von mindestens 350 °C mit dem Reduktionsmittel versetzt wird.

6. Verfahren nach einem der vorstehenden Ansprüche, **dadurch gekennzeichnet, dass** das mit Stickoxiden beladene Abgas organische Verbindungen und/oder Kohlenmonoxid enthält und jede Wärmespeicherkammer (2, 3) einen Katalysator zur Oxidation der organischen Verbindungen und/oder von Kohlenmonoxid aufweist.

7. Verfahren nach einem der vorstehenden Ansprüche, **dadurch gekennzeichnet, dass** das mit Stickoxiden beladene Abgas das Abgas eines industriellen Prozesses ist, bei dem aufgrund der hohen Prozesstemperatur in Gegenwart von Luft Stickoxide gebildet werden, insbesondere das Abgas, das bei der Zementklinkerherstellung oder der Kalkherstellung anfällt.

8. Verfahren nach einem der vorstehenden Ansprüche, **dadurch gekennzeichnet, dass** zur Pyrolyse von Ablagerungen an den Wärmespeichermassen (4, 5) mit dem Rezirkulationssystem ein mindestens 400 °C heißes Gas durch die Wärmespeichermasse (4, 5) geleitet wird, um es nach Verbrennen der Pyrolyseprodukte mit der Wärmequelle (24) erneut durch die Wärmespeichermasse (4, 5) zu leiten.

9. Verfahren nach einem der vorstehenden Ansprüche, **dadurch gekennzeichnet, dass** die für die Reaktion an den Katalysatoren notwendige Energie durch die Umsetzung von NOx, Kohlenwasserstoffen und Kohlenmonoxid zumindest teilweise oder gänzlich vom Prozeß zur Verfügung gestellt wird und damit die notwendige Primärenergie reduziert bzw. nicht mehr benötigt wird.

10. Anlage zur Durchführung des Verfahren nach einem der vorstehenden Ansprüche, **dadurch gekennzeichnet, dass** auf der dem Reduktionskatalysator (6) zur Reduktion der Stickoxide zugewandten Seite der Wärmespeichermasse (4, 5) der Wärmespeicherkammern (2, 3) jeweils ein Verteilrechen (17, 18) vorgesehen ist, mit dem Verteilrechen (18) in der Wärmespeicherkammer (3), aus der das Reingas austritt, ein Teilstrom des heißen Reingases mit dem Rezirkulationssystem entnehmbar, mit der Wärmequelle (24) weiter aufheizbar und mit dem Reduktionsmittel versetzt dem Verteilrechen (17) in der Wärmespeicherkammer (2) zum Erwärmen des zu reinigenden Rohgases auf die für die Reduktion der Stickoxide notwendige Temperatur zuführbar ist.

11. Anlage nach Anspruch 10, **dadurch gekennzeichnet, dass** das Rezirkulationssystem eine Kreislaufleitung (16) aufweist, mit der das Reingas von dem Verteilrechen (18) über ein Mehrwegeventil (19, 42) der Wärmequelle (24), anschließend der Einrichtung 25 zur Zufuhr des Reduktionsmittels und über ein Mehrwegeventil (28, 41) dem Verteilrechen (17) in der Wärmespeicherkammer (2) zum Erwärmen des zu reinigenden Rohgases auf die für die Reduktion der Stickoxide notwendige Temperatur zuführbar ist.

12. Anlage nach Anspruch 11, **gekennzeichnet durch** eine Bypass-Leitung (29) zur Umgehung der Wärmequelle (24), um die Temperatur des mit dem Reduktionsmittel mit der Reduktionsmittelzufuhreinrichtung (25) versetzten Reingases einzustellen, das dem Verteilrechen (17) in der Wärmespeicherkammer (2) zum Erwärmen des Rohgases auf die für die Reduktion der Stickoxide notwendige Temperatur zuführbar ist.

13. Anlage nach einem der Ansprüche 10 bis 12, **dadurch gekennzeichnet, dass** in der Kreislaufleitung (16) der Reduktionsmittelzufuhreinrichtung (25) ein Mischer (32) nachgeschaltet ist.

14. Anlage nach einem der Ansprüche 10 bis 13, **dadurch gekennzeichnet, dass** die Verteilrechen (17, 18) sich quer durch die Wärmespeicherkammer (2, 3) erstreckende Rohre (33) mit einer Vielzahl von seitlichen Öffnungen (34) zum Zumischen des Reduktionsmittels über den Querschnitt der Wärmespeicherkammer (2, 3) aufweisen.

15. Anlage nach einem der Ansprüche 10 bis 14, **dadurch gekennzeichnet, dass** zur Rohgaszufuhr und zur Reingasabfuhr jeweils eine Sammelleitung (7, 8) für die Wärmespeicherkammern (2, 3) vorgesehen ist.

16. Anlage nach einem der Ansprüche 10 bis 15, **dadurch gekennzeichnet, dass** der Reduktionskatalysator (6) auch zur Reduktion von Kohlenwasserstoffen, Dioxin und Furane und anderen Kohlenstoff-haltigen Stoffen geeignet ist.

17. Anlage nach einem der Ansprüche 10 bis 16, **dadurch gekennzeichnet, dass** zwischen der Wärmespeichermasse (4, 5) und dem Verteilrechen (17, 18) in jeder Wärmespeicherkammer (2, 3) ein Oxidationskatalysator (43) angeordnet ist, um in das Abgas eintretende organische Verbindungen und/oder Kohlenmonoxid zu oxidieren.

## Claims

1. Process for the purification of waste gas charged with nitrogen oxides in a reactor (1, 1') with heat-accumulator chambers (2, 3) containing heat-accumulator materials (4, 5) in which the raw gas to be purified alternately enters a heat-accumulator chamber (2), is preheated by the heat-accumulator material (4) thereof and, mixed with a reducing agent for reducing the nitrogen oxides, supplied to a catalyst (6) for reducing the nitrogen oxides and the denitrified hot clean gas heats the heat-accumulator material (5) in the at least one heat-accumulator chamber (3) which the clean gas exits, **characterized by** a recirculation system by means of which a partial flow of the clean gas is taken from the at least one heat-accumulator chamber (3) which the clean gas exits before the clean gas enters the heat-accumulator material (5) thereof, is heated by means of a heat source (24) and, mixed with a reducing agent, is supplied to the at least one heat-accumulator chamber (2) which the raw gas enters after the raw gas has exited the heat-accumulator material (4) thereof.

2. Process according to claim 1, **characterized in that** the reactor (1') has a plurality of pairs (P1, P2, P3) of heat-accumulator chambers (2, 3), wherein each pair (P1, P2, P3) comprises a heat-accumulator chamber (2) which the raw gas enters, a catalyst (6) for reducing the nitrogen oxides and a heat-accumulator chamber (3) which the clean gas exits, wherein a partial flow of the clean gas is taken from each of the heat-accumulator chambers (3) which the clean gas exits and the partial flows taken are collectively supplied to the heat source (24) by means of the recirculation system, mixed with the reducing agent and supplied again as a partial flow to the heat-accumulator chambers (2) of the pairs (P1, P2, P3) which the raw gas enters.

3. Process according to claim 1 or 2, **characterized in that** the partial flow of the clean gas taken from the heat-accumulator chamber (3) which the clean gas exits is between 2 and 15 percent of the clean gas.

4. Process according to any of the preceding claims, **characterized in that** only a part of the partial flow of the clean gas is supplied to the heat source (24) and combined again with the remaining partial flow before being mixed with the reducing agent.

5. Process according to any of the preceding claims, **characterized in that** the partial flow of the clean gas with a temperature of at least 350 °C is mixed with the reducing agent.

6. Process according to any of the preceding claims, **characterized in that** the waste gas charged with nitrogen oxides contains organic compounds and/or carbon monoxide and each heat-accumulator chamber (2, 3) has a catalyst for oxidizing the organic compounds and/or carbon monoxide.

7. Process according to any of the preceding claims, **characterized in that** the waste gas charged with nitrogen oxides is the waste gas of an industrial process in which, due to the high processing temperature, nitrogen oxides are generated in the presence of air, in particular the waste gas which arises from the production of cement clinker or the production of lime.

8. Process according to any of the preceding claims, **characterized in that**, for the pyrolysis of deposits on the heat-accumulator materials (4, 5) by means of the recirculation system, gas with a temperature of at least 400 °C is passed through the heat-accumulator material (4, 5) in order to pass it through the heat-accumulator material (4, 5) again after the pyrolysis products have been combusted by means of the heat source (24).

9. Process according to any of the preceding claims, **characterized in that**, due to the conversion of NOₓ, hydrocarbons and carbon monoxide, the energy required for the reaction by the catalysts is at least partially or entirely provided by the process and thus the necessary primary energy is reduced or no longer required.

10. System for carrying out the process according to any of the preceding claims, **characterized in that** a distribution grate (17, 18) is provided on the side of the heat-accumulator material (4, 5) of the heat-accumulator chambers (2, 3) facing the reduction catalyst (6) for reducing the nitrogen oxides, a partial flow of the hot clean gas can be taken by the recirculation system by means of the distribution grate (18) in the heat-accumulator chamber (3) which the clean gas exits, further heated by means of the heat source (24) and, mixed with the reducing agent, supplied to the distribution grate (17) in the heat-accumulator chamber (2) for heating the raw gas to be purified to the temperature required for the reduction of the nitrogen oxides.

11. System according to claim 10, **characterized in that** the recirculation system has a circulation pipe (16) by means of which the clean gas can be supplied from the distribution grate (18) via a multi-way valve (19, 42) to the heat source (24), then to the device (25) for supplying the reducing agent and via a multi-way valve (28, 41) to the distribution grate (17) in the heat-accumulator chamber (2) for heating the raw gas to be purified to the temperature required for the reduction of the nitrogen oxides.

12. System according to claim 11, **characterized by** a bypass pipe (29) for bypassing the heat source (24) in order to set the temperature of the clean gas mixed with the reducing agent by means of the reducing agent supply device (25), which can be supplied to the distribution grate (17) in the heat-accumulator chamber (2) for heating the raw gas to the temperature required for the reduction of the nitrogen oxides.

13. System according to any of claims 10 to 12, **characterized in that** a mixer (32) is arranged downstream of the reducing agent supply device (25) in the circulation pipe (16).

14. System according to any of claims 10 to 13, **characterized in that** the distribution grates (17, 18) have pipes (33) extending across the heat-accumulator chamber (2, 3) and including a plurality of lateral openings (34) for adding the reducing agent over the cross section of the heat-accumulator chamber (2, 3).

15. System according to any of claims 10 to 14, **characterized in that**, for supplying the raw gas and for discharging the clean gas, a collecting pipe (7, 8) is provided for the heat-accumulator chambers (2, 3).

16. System according to any of claims 10 to 15, **characterized in that** the reduction catalyst (6) is also suited for the reduction of hydrocarbons, dioxin and furan as well as other carbonic substances.

17. System according to any of claims 10 to 16, **characterized in that**, an oxidation catalyst (43) is arranged between the heat-accumulator material (4, 5) and the distribution grate (17, 18) in each heat-accumulator chamber (2, 3) for oxidizing organic compounds and/or carbon monoxide entering the waste gas.

## Revendications

1. Procédé pour la purification de gaz d'échappement chargé en oxyde d'azote dans un réacteur (1, 1') comportant des chambres d'accumulation de chaleur (2, 3) contenant des masses d'accumulation de chaleur (4, 5), dans lequel le gaz brut à purifier entre en alternance dans une chambre d'accumulation de chaleur (2), est préchauffé par la masse d'accumulation de chaleur (4) de celle-ci, est mélangé à un agent réducteur pour réduire les oxydes d'azote, est amené à un catalyseur (6) pour réduire les oxydes d'azote, et le gaz purifié chaud dénitruré chauffe la masse d'accumulation de chaleur (5) dans ladite au moins une chambre d'accumulation de chaleur (3) hors de laquelle le gaz purifié sort, **caractérisé par** un système de recirculation avec lequel on prélève de ladite au moins une chambre d'accumulation de chaleur (3), hors de laquelle le gaz purifié sort, avant l'entrée du gaz purifié dans la masse d'accumulation de chaleur (5) de celle-ci, un flux partiel de gaz purifié, on le chauffe avec une source de chaleur (24) et, mélangé à un agent réducteur, on l'amène dans ladite au moins une chambre d'accumulation de chaleur (2) dans laquelle le gaz brut entre, après la sortie du gaz brut hors de la masse d'accumulation de chaleur (4) de celle-ci.

2. Procédé selon la revendication 1, **caractérisé en ce que** le réacteur (1') présente plusieurs paires (P1, P2, P3) de chambres d'accumulation de chaleur (2, 3), chaque paire (P1, P2, P3) comprenant une chambre d'accumulation de chaleur (2) dans laquelle le gaz brut entre, un catalyseur (6) pour réduire les oxydes d'azote et une chambre d'accumulation de chaleur (3) hors de laquelle le gaz purifié, un flux partiel respectif du gaz purifié étant prélevé des chambres d'accumulation de chaleur (3) hors desquelles le gaz purifié sort, et les flux partiels prélevés étant amenés ensemble à la source de chaleur (24) avec le système de recirculation, mélangés à l'agent réducteur et ramenés sous forme de flux partiel aux chambres d'accumulation de chaleur (2) des paires (P1, P2, P3) dans lesquelles le gaz brut entre.

3. Procédé selon les revendications 1 ou 2, **caractérisé en ce que** le flux partiel du gaz purifié qui est prélevé de la chambre d'accumulation de chaleur (3) hors de laquelle le gaz purifié sort, constitue entre 2 et 15 % du gaz purifié.

4. Procédé selon l'une des revendications précédentes, **caractérisé en ce que** seulement une partie du flux partiel du gaz purifié est amené à la source de chaleur (24) et de nouveau réuni au reste du flux partiel avant le mélange avec l'agent réducteur.

5. Procédé selon l'une des revendications précédentes, **caractérisé en ce que** le flux partiel du gaz purifié est mélangé à l'agent réducteur à une température d'au moins 350°C.

6. Procédé selon l'une des revendications précédentes, **caractérisé en ce que** le gaz d'échappement chargé en oxydes d'azote contient des composés organiques et/ou du monoxyde de carbone, et chaque chambre d'accumulation de chaleur (2, 3) présente un catalyseur pour l'oxydation des composés organiques et/ou du monoxyde de carbone.

7. Procédé selon l'une des revendications précédentes, **caractérisé en ce que** le gaz d'échappement chargé en oxydes d'azote est le gaz d'échappement d'un processus industriel dans lequel, en raison de la haute température de processus en présence d'air, sont formés des oxydes d'azote en particulier le gaz d'échappement qui est engendré lors de la fabrication de clinkers de ciment ou de la production de chaux.

8. Procédé selon l'une des revendications précédentes, **caractérisé en ce que** pour la pyrolyse de dépôts sur les masses d'accumulation de chaleur (4, 5) avec le système de recirculation, on introduit un gaz chaud d'au moins 400°C dans la masse d'accumulation de chaleur (4, 5) pour l'introduire de nouveau dans la masse d'accumulation de chaleur (4, 5) après la combustion des produits de pyrolyse avec la source de chaleur (24).

9. Procédé selon l'une des revendications précédentes, **caractérisé en ce que** l'énergie nécessaire pour la réaction au niveau des catalyseurs est mise à disposition au moins partiellement ou totalement par le processus, par la conversion de NOx, d'hydrocarbures et de monoxyde de carbone et, par conséquent, l'énergie primaire nécessaire est réduite ou n'est plus nécessaire.

10. Installation pour mettre en oeuvre le procédé selon l'une des revendications précédentes, **caractérisée en ce que** sur la face de la masse d'accumulation de chaleur (4, 5) des chambres d'accumulation de chaleur (2, 3), qui est tournée vers le catalyseur de réduction (6) pour réduire les oxydes d'azote, est prévu un râtelier de distribution (17, 18) respectif, **en ce qu'**avec le râtelier de distribution (18) dans la chambre d'accumulation de chaleur (3) hors de laquelle le gaz purifié sort, on peut prélever un flux partiel du gaz purifié chaud avec le système de recirculation, on peut encore le chauffer avec la source de chaleur (24) et, mélangé avec l'agent réducteur, on peut l'amener au râtelier de distribution (17) dans la chambre d'accumulation de chaleur (2) pour chauffer le gaz brut à purifier à la température nécessaire à la réduction des oxydes d'azote.

11. Installation selon la revendication 10, **caractérisée en ce que** le système de recirculation présente une conduite de circulation (16) avec laquelle on peut amener le gaz purifié depuis le râtelier de distribution (18) via une vanne multivoies (19, 42) à la source de chaleur (24), ensuite au dispositif (25) pour amener l'agent réducteur et, via une vanne multivoies (28, 41), au râtelier de distribution (17) dans la chambre d'accumulation de chaleur (2) pour chauffer le gaz brut à purifier à la température nécessaire à la réduction des oxydes d'azote.

12. Installation selon la revendication 11, **caractérisée par** une conduite de dérivation (29) pour contourner la source de chaleur (24) afin de régler la température du gaz purifié mélangé à l'agent réducteur au moyen du dispositif d'amenée d'agent réducteur (25), lequel peut être amené au râtelier de distribution (17) dans la chambre d'accumulation de chaleur (2) pour chauffer le gaz brut à la température nécessaire pour la réduction des oxydes d'azote.

13. Installation selon l'une des revendications 10 à 12, **caractérisée en ce qu'**un mélangeur (32) est monté en aval dans la conduite de circulation (16) du dispositif d'amenée d'agent réducteur (25).

14. Installation selon l'une des revendications 10 à 13, **caractérisée en ce que** les râteliers de distribution (17, 18) présentent des tubes (33) s'étendant au travers de la chambre d'accumulation de chaleur (2, 3) et comportant une multitude d'orifices (34) latéraux pour mélanger l'agent réducteur sur la section transversale de la chambre d'accumulation de chaleur (2, 3).

15. Installation selon l'une des revendications 10 à 14, **caractérisée en ce qu'**il est prévu pour les chambres d'accumulation de chaleur (2, 3) un conduite collectrice (7, 8) respective pour l'amenée de gaz brut et l'évacuation de gaz purifié.

16. Installation selon l'une des revendications 10 à 15, **caractérisée en ce que** le catalyseur de réduction (6) est aussi approprié pour la réduction d'hydrocarbures, de dioxine et de furane et autre substances contenant du carbone.

17. Installation selon l'une des revendications 10 à 16, **caractérisée en ce que** dans chaque chambre d'accumulation de chaleur (2, 3), un catalyseur d'oxydation (43) est agencé entre la masse d'accumulation de chaleur (4, 5) et le râtelier de distribution (17, 18) pour oxyder les composés organiques et/ou le monoxyde de carbone entrant dans le gaz d'échappement.
